# EUROPEAN PATENT SPECIFICATION

(11) **EP 4 296 711 B1**
(45) Date of publication and mention of the grant of the patent: **02.09.2026**
(21) Application number: 22180544.3
(22) Date of filing: 22.06.2022
(51) Int. Cl.: G01S 7/40, G01S 13/86, G06T 7/80, G01S 19/23

(54) **AUTOMATIC EXTRINSIC CALIBRATION AND CALIBRATION VALIDATION OF DIFFERENT SENSOR MODALITIES, E.G CAMERA, RADAR AND LIDAR SENSORS**
AUTOMATISCHE EXTRINSISCHE KALIBRIERUNG UND KALIBRIERUNGSVALIDIERUNG VON VERSCHIEDENEN SENSORMODALITÄTEN WIE Z.B. KAMERA-, RADAR- UND LIDARSENSOREN
ÉTALONNAGE EXTRINSÈQUE AUTOMATIQUE ET VALIDATION D'ÉTALONNAGE DE DIFFÉRENTES MODALITÉS DE CAPTEUR, PAR EXEMPLE CAMÉRA, CAPTEURS RADAR ET LIDAR

(43) Date of publication of application: 27.12.2023
(73) Proprietor: AImotive Kft., 1025 Budapest (HU)
(72) Inventor: ZSIROS, Tamás, 5440 Kunszentmárton (HU); LÉRÁNT-NYESTE, Mátyás, 1062 Budapest (HU); KOZMA, Péter Dániel, 1023 Budapest (HU)
(74) Representative: Hofmann, Matthias

(56) References cited:
- EP-A1- 3 296 762
- WO-A1-2021/007152
- GB-A- 2 422 499
- GUOHANG YAN ET AL: "OpenCalib: A multi-sensor calibration toolbox for autonomous driving", ARXIV.ORG, CORNELL UNIVERSITY LIBRARY, 201 OLIN LIBRARY CORNELL UNIVERSITY ITHACA, NY 14853, 27 May 2022 (2022-05-27), XP091234169
- JIANG JINGJING ET AL: "Line Feature Based Extrinsic Calibration of LiDAR and Camera", 2018 IEEE INTERNATIONAL CONFERENCE ON VEHICULAR ELECTRONICS AND SAFETY (ICVES), IEEE, 12 September 2018 (2018-09-12), pages 1 - 6, XP033439350, [retrieved on 20181031], DOI: 10.1109/ICVES.2018.8519493

## Description

### TECHNICAL FIELD

The present invention relates to a method for calibrating a first and a second sensor of a vehicle and a calibration unit for calibrating a first and a second sensor of a vehicle.

The present invention also relates to a computer-readable storage medium storing program code, the program code comprising instructions for carrying out such a method.

### BACKGROUND

Modern cars, both autonomous and non-autonomous, comprise an increasing number of sensors of different modalities. These sensors need to be calibrated. For example, an intrinsic calibration of a camera comprises determining a set of parameters for a camera projection model that relates 2D image points to 3D scene points, where optimal parameters correspond to minimal reprojection error. If there are sensors of more than one modality, an extrinsic calibration is required. Extrinsic calibration can involve determining parameters that match points from one sensor to the corresponding points of another sensor.

GUOHANG YAN ET AL, "OpenCalib: A multi-sensor calibration toolbox for autonomous driving", ARXIV.ORG, CORNELL UNIVERSITY LIBRARY, 201 OLIN LIBRARY CORNELL UNIVERSITY ITHACA, NY 14853, (20220527) discloses OpenCalib, a calibration toolbox that contains a rich set of various sensor calibration methods. OpenCalib covers manual calibration tools, automatic calibration tools, factory calibration tools, and online calibration tools for different application scenarios.

JIANG JINGJING ET AL discloses an effective extrinsic calibration pipeline to establish the transformation between camera and LiDAR and update the decalibration online on an autonomous driving platform.

WO 2021/007152 A1 discloses that a method for autonomous vehicle control preferably includes sampling measurements, determining refined sensor poses based on the measurements, determining an updated vehicle pose based on the measurements and operation matrix, optionally determining evaluation sensor poses based on the refined sensor poses, optionally updating the operation matrix(es) based on the evaluation sensor poses, and/or any other suitable elements. The system for autonomous vehicle control can include one or more vehicles, one or more sensors, one or more processing systems, and/ or any other suitable components.

### SUMMARY OF THE INVENTION

The objective of the present invention is to provide a method for calibrating a first and a second sensor of a vehicle and a calibration unit for calibrating a first and a second sensor of a vehicle, which overcome one or more of the above-mentioned problems of the prior art.

A first aspect of the invention provides a computer-implemented method for calibrating a first and a second sensor of a vehicle, the method comprising:
- obtaining first data from the first sensor and second data from the second sensor,
- filtering at least the second data based on positions of data points of the second data, wherein the filtering the second data comprises filtering based on a filtering region, wherein the filtering region is shifted based on an angle of a steering direction of the vehicle to partially overlap with a view region of the second sensor, wherein the likelihood of an object moving on a curved path falling into the overlap is increased, and
   - determining one or more parameters of a calibration between the first and the second sensor based on the first data and the filtered second data.

The method of the first aspect has the advantage that the calibration is performed based on the filtered second data. The filtering can be performed such that clearly irrelevant points are filtered out and the calibration is performed on those points that have not been filtered out. Thus, a probability of an erroneous calibration can be reduced and an overall reliability of the calibration is improved.

The first and/or second sensor can comprise a camera. Obtaining first and/or second data can comprise obtaining first and/or second images.

As will be outlined further below, it is understood that in addition to the first and second sensor, the method can calibrate additional sensors at the same time.

Filtering at least the second data means that optionally also, the first data can be filtered. Filtering at least the second data can comprise that datapoints of the second data that have positions that fall in certain one or more regions, e.g. one or more predetermined certain regions, are filtered out, i.e., removed. For example, datapoints that have positions that are outside a certain target region can be removed. The target region may depend on properties of the steering, e.g., the steering direction of the vehicle.

The calibration may comprise an alignment between the first and second sensor, e.g., the calibration may comprise three parameters for translation and tree parameters for rotation between the coordinate system of the first sensor and the second sensor.

In a first implementation of the method according to the first aspect, the method further comprises using an a priori calibration to convert the first data and/or the second data into a common domain.

Using the a prior calibration has the advantage that a priori knowledge about the relative orientation between the first and second sensor can be used as a starting point for determining the final calibration between the first and the second sensor. For example, knowledge about a mounting position of the first sensor relative to a mounting position of the second sensor can be used to determine the a prior calibration.

In a further implementation of the method according to the first aspect, the method further comprises a step of detecting first objects in the first data and/or detecting second objects in the filtered second data and performing the determining of the one or more parameters based on the first and/or second objects.

Performing the calibration based on detected objects has the advantage that even if the first and second sensor use different modalities (which may result in different kinds of datapoints in the first and second data), accurate calibration can be performed - based on the detected objects which may be fully corresponding in the first and second data.

In a further implementation of the method according to the first aspect, the determining the one or more parameters is based on center points of the first and/or second objects.

For example, the first sensor may acquire many datapoints for a given object, whereas the second sensor might require fewer datapoints for the same given object. However, from the datapoints on the first sensor and the datapoints of the second sensor, the same center points can be determined.

In a further implementation of the method according to the first aspect, the first sensor and/or the second sensor comprise one or more of a regular camera, a stereo camera, a radar, and a lidar.

In other embodiments, the first and/or second sensor may comprise any further sensor modalities providing data proper for executing the method on.

In a further implementation of the method according to the first aspect, the one or more parameters of the calibration include yaw and pitch parameters, and the method further comprises filtering the second data based on a filter region that has a region width around a center line from the sensor towards a distant point, wherein the distant point has a lateral and/or vertical coordinate component that corresponds to the lateral and/or vertical coordinate component of a position of the sensor.

In other words, in this implementation, the filter region can be rectangular region (seen from above) in front of the vehicle. Experiments have shown that this region is particularly useful as filter region. Filter region herein refers to that region where the datapoints are not filtered out, i.e., where the datapoints are kept and used in the further calibration process.

Preferably, the region width is determined based on a predetermined table that assigns a predetermined width to a given pair of first and second sensor, and/or the region width is determined based on a position and/or an orientation of the sensor.

In a further implementation of the method according to the first aspect, a position of the distant point in the coordinates of a reference sensor is determined as:
- P_{ref sensor} = **T p**_{cal_sensor} ,
- P_{ref sensor} = **K**_{ref_sensor} T **p**_{cal_sensor} ,
- ${p}_{ref_sensor} = T {K}_{cal_sensor}^{- 1} {p}_{cal_sensor}$, and
- ${p}_{ref_sensor} = {K}_{ref_sensor} T {K}_{cal_sensor}^{- 1} {p}_{cal_sensor}$,
wherein **p**_{cal_sensor} is a position of the distant point in coordinates of a calibration sensor, **p**_{ref_sensor} is the position of the distant point in the reference sensor's coordinates, **T** is a matrix transforming between the coordinate systems of the calibration sensor and the reference sensor, and **K**_{cal_sensor} and **K**_{ref_sensor} are the respective camera matrix transformations.

**K**_{cal_sensor} and **K**_{ref_sensor} can be identity matrices. In general, the used matrix depends on the used type of sensor.

In a further implementation of the method according to the first aspect, the one or more parameters of the calibration include at least one roll parameter, and the method further comprises filtering the second data based on a filtering region that has a fixed width around a center line from the sensor towards a distant point that in coordinates of the sensor is laterally shifted from the sensor position by a lateral shift.

In a further implementation of the method according to the first aspect, the determining a lateral location of the filtering region comprises evaluating a sinus of an angle of the steering direction, wherein preferably the evaluating comprises multiplying the sinus of the angle of the steering direction with a sensitivity constant, preferably further multiplying with a constant proportional to a focal length of a camera sensor.

In a further implementation of the method according to the first aspect, the method is carried out repeatedly, using a plurality of candidate a priori calibrations between the first and second sensor, and wherein preferably, the method comprises an additional step of choosing a preferred a priori calibration from the plurality of candidate a priori calibrations.

In a further implementation of the method according to the first aspect, the determining the one or more parameters of the calibration between the first sensor and the second sensor comprises:
- determining a pairing between points in the first data and points in the second data, and
- determining the one or more parameters such that an error between paired points is minimized.

In a further implementation of the method according to the first aspect, the calibrating the first and the second sensor further comprises calibrating a third sensor with the first and the second sensor, and the determining one or more parameter of the calibration comprises minimizing an error of point pairs between the first and second sensor, point pairs between the second and third sensor, and point pairs between the third and first sensor.

Preferably, the minimizing of the error of the point pairs comprises minimizing a weighted sum of the errors of the point pairs of the sensor pairs.

In a further implementation of the method according to the first aspect, the method further comprises validating the a priori calibration, wherein the validating comprises comparing the one or more parameters of the determined calibration with one or more corresponding parameters of an a priori calibration and validating the calibration if a difference between the determined calibration and the a priori calibration is smaller than a predetermined threshold.

In a further implementation of the method according to the first aspect, the validating comprises, for each of a plurality of sensors, which comprise the first and the second sensor:
- determining first center points of detected objects as projected onto coordinates of another sensor of the plurality of sensors using the parameters of the determined calibration,
- determining second center points of detected objects as projected onto coordinates of the other sensor of the plurality of sensors using parameters of the a priori calibration, and
- determining a distance between the first and the second center points,
   wherein preferably, the calibration between the sensor and the other sensor of the plurality of sensors is validated if the distance is smaller than a predetermined threshold.

A second aspect of the invention provides a calibration unit for calibrating a first and a second sensor of a vehicle, the calibration unit comprising:
- an obtaining unit for obtaining first data from a first sensor and second data from the second sensor,
- a filtering unit for filtering at least the second data based on positions of data points of the second data, wherein the filtering the second data comprises filtering based on a filtering region, wherein the filtering region is shifted based on an angle of a steering direction of the vehicle to partially overlap with a view region of the second sensor,
   wherein the likelihood of an object moving on a curved path falling into the overlap is increased, and
- a determining unit for determining one or more parameters of a calibration between the first and the second sensor based on the first data and the filtered second data

The calibration unit can be a calibration system.

A further aspect of the invention refers to a computer-readable storage medium storing program code executed for calibrating a first and a second sensor of a vehicle, the program code comprising instructions that when executed by a processor carry out the method of the second aspect or one of the implementations of the first aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a schematic illustration of vehicles that are detected as objects in front of a car in accordance with an embodiment of the present invention,
- FIG. 2A: is a schematic illustration of a car and the view regions of its two sensors (a radar and a camera) in accordance with an embodiment of the present invention,
- Fig. 2B: is a schematic illustration of a car, the view region of a sensor of the car and the base filter area, as well as the shifted filter area based on a steering angle of the car, in accordance with an embodiment of the present invention, and
- FIGs. 3A and 3B: are a flow chart of a method in accordance with an embodiment of the present invention.

### DETAILED DESCRIPTION OF EMBODIMENTS

The foregoing descriptions are only implementation manners of the present invention, the scope of the present invention is not limited to this. Any variations or replacements can be easily made through the person skilled in the art. Therefore, the protection scope of the present invention should be subject to the protection scope of the attached claims.

From the perspective of autonomous driving, multiple sensors, for example multiple cameras, are important for improving road safety. However, processing the data of multiple sensors on a vehicle requires both an accurate intrinsic calibration for each camera and an accurate extrinsic calibration. An accurate intrinsic calibration of a camera can comprise of an optimal set of parameters for a camera projection model that relates 2D image points to 3D scene points; these optimal parameters correspond to minimal reprojection error. In the following, we refer instead to the task of extrinsic calibration. An accurate extrinsic calibration may correspond to accurate camera poses with respect to a reference frame on the vehicle. Accurate calibration allows feature points from one sensor to be reprojected into another sensor with low reprojection errors.

During an automatic extrinsic calibration process, in the following just referred to as calibration, the following data may be used:
- Regular camera frames (2D) or the depth image created from stereo cameras (3D).
- Radar point cloud (2D/3D)
- Lidar point cloud (3D)
- The sensor to be calibrated may provide additional data, e.g., the velocity, intensity, cross-section size and/or confidence of detections. These may be used for aiding the calibration process.
- For sensors implementing tracking, these tracks can be further utilized for aiding the calibration process. (The tracks may also exhibit further properties, like physical size, confidence, stc.)

An important step before calibration is the pairing of above detections between sensors. If the format of said detections varies between any sensor pair, first, they are converted to the same domain - practically to a domain supporting their pairing. These common domains and the corresponding conversions may be one or more of:
- Regular camera frame + point cloud: The points of the cloud are projected onto the image space of the camera.
- Point cloud + point cloud with tracking information: On the regular point cloud, object detection is executed. These objects can then be paired with the tracks.
- Point cloud + point cloud: Object detection based, analog to the previous point. Also note, that since the density of these point clouds may differ greatly, the one-to-one pairing of them may not be an option.

A lidar device may detect tens of thousands of points with each measurement, while a radar device may detect only ten to a hundred points with each of its measurements, making the one-to-one pairing of such data cumbersome.

### EXAMPLE OF HANDLING INPUTS

In a first embodiment, each detected object is represented with a single point. For calibrating a single camera and a single radar device, the following can be done:
For processing the camera frames, different (state-of-the-art) image processing and/or object detection methods may be used. For this example, let the detected objects be the cars visible on the camera frame. Then, we may use a neural network trained for detecting these objects, providing their positions in image-space.

For processing the radar frames, we may use several methods, just like for the camera frames. For example, using the relative velocities provided by most radars, we can select which objects are moving and which are stationary. Furthermore, the point cloud can be clustered (several algorithms exist for this purpose), then the center points of the objects found this way can be easily set.

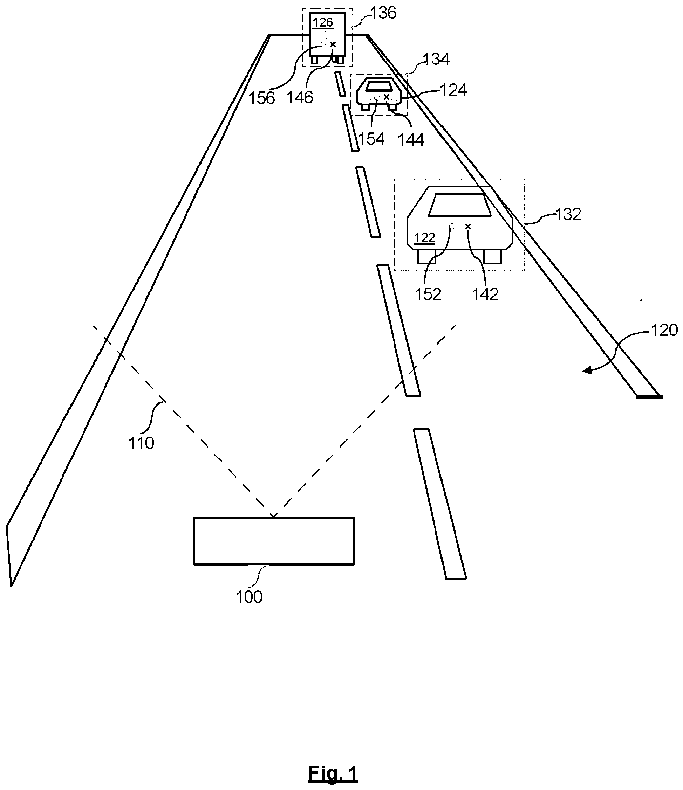

FIG. 1 shows how a sensor 100, e.g., a camera, sees a street 120 with vehicles 122, 124, and 126 in front of the vehicle (not shown), which carries the sensor 100.

The method may be implemented differently when using different sensors: Using a radar device capable of tracking objects, the clustering step may be eliminated, since we get the required positions from the device itself. Using e.g. a lidar instead of the camera, one can cluster its point cloud just like that of the radar.

Generally, for each of the detected objects, here the vehicles 122, 124, 126, bounding boxes 132, 134, 136 and center points of the bounding boxes 132, 134, 136 can be identified.

In FIG. 1, the crosses 142, 144, 146 in the cars are indicate the centers of the objects detected on the camera frames using a neural network. The circles 152, 154, 156 indicate the centers of the clusters detected on the radar frames projected onto the image. As can be seen in FIG. 1, the centers 142, 144, 146 of the objects detected on the camera frame are not fully aligned with the centers of the clusters detected on the radar frames.

### PAIRING OF DATA

An important aspect of the described calibration method is the way the data is paired. This may already be a daunting task, since e.g. the a priori calibration used for transforming the data of the paired sensors onto the same domain may be highly corrupted. For this step, a method is required that can work on all possible combinations of sensor pairings.

A trivial way of pairing is selecting the closest (spatially, using some norm) points among the sensors. This method, however, is highly prone to error, necessitating the use of more sophisticated ones. Beyond this point, the literature does not provide any further guidance.

Using some filtering methods, enough points can be eliminated, so that the chances for acquiring an incorrect pairing is minimal. The filtering is:
∘ Easy - We only have to work with one point per detected object (its center point). The filtering of these data e.g. by their position requires small computational capacity.
∘ Robust - It can be implemented on all sensors

It is understood that e.g. both the data from a first sensor and the data from a second sensor can be filtered and in that case different filtering rules can be applied to the data from the different sensors. At least one of the applied filtering methods is based on a position of the data, i.e., the decision which datapoint to keep and which datapoint to filter out is based on a position of the datapoint in the data.

The a priori calibration may contain significant errors. A goal of the presented method includes the elimination of these errors. If no or just minimal error is present, the distances of the point pairs is minimal, thus the result of the calibration will be highly similar to the a priori. Thus, the method can also be used for the validation of existing calibration parameters.

The selection of the sensor pairs can be done by either the user or the software. The pair may be any combination of the camera, radar and lidar devices present, provided they share a common view region.

Generally: For calibrating the yaw and pitch of a sensor, the center of its view region shall be selected. For calibrating the roll of a sensor, the perimeter of its view region shall be selected. Also, for the second sensor the selected view region depends on the first sensor's view region and the a priori calibration (e.g. one sensor may look forward and the other may look sideways).

For the calibration of yaw and pitch, the following steps may be utilized:
Selecting a virtual point (**P**_{cal_sensor}) in front of the sensor: Longitudinally to X meters from the sensor. (In our case, X=50.) Laterally and vertically the point's position does not differ from that of the sensor. (The point is defined in the coordinates of the sensor.)

Selecting the width of the filtered region can be done by using a pre-defined list, containing each sensor. (In our case, the widths were around 3-4 meters, which is equal to the width of a road lane.)
▪ The values of this list are up to the user to define. They shall be chosen keeping in mind the position and orientation of the sensors, the possible environments, and the objects to be detected.
▪ The list shall contain all possible combinations of sensor pairs.

Knowing the width of the filtered region and setting its center to the virtual point previously defined (**P**_{cal_sensor}), the region is well defined. This region can be transformed between the sensors using their a priori calibration. (e.g. let **T** be the matrix transforming between the sensors' coordinate systems. Also let's assume, that one of the sensors is a camera - in this case, we also have to apply a **K** camera matrix transformation, projecting the 3D points onto image-space. Using these, the following can be written: **P**_{ref_sensor} = (**K** *) **T** * **P**_{cal_sensor}.

For the calibration of roll, the utilized steps are the same as before, except for the position of the virtual point - its lateral distance is not zero, rather a value with which objects on the perimeter region of the view region can be optimally selected. For a forward-looking radar this value can been chosen as Y = +/- x meters, with x between 3 and 12 meters, preferably between 4 and 8 meters. These values have shown to be beneficial since they correspond about to the right and left road lanes.

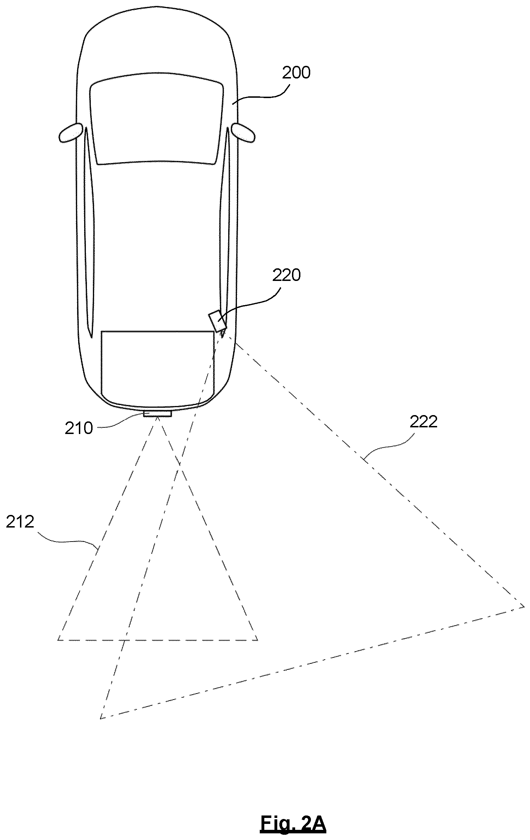

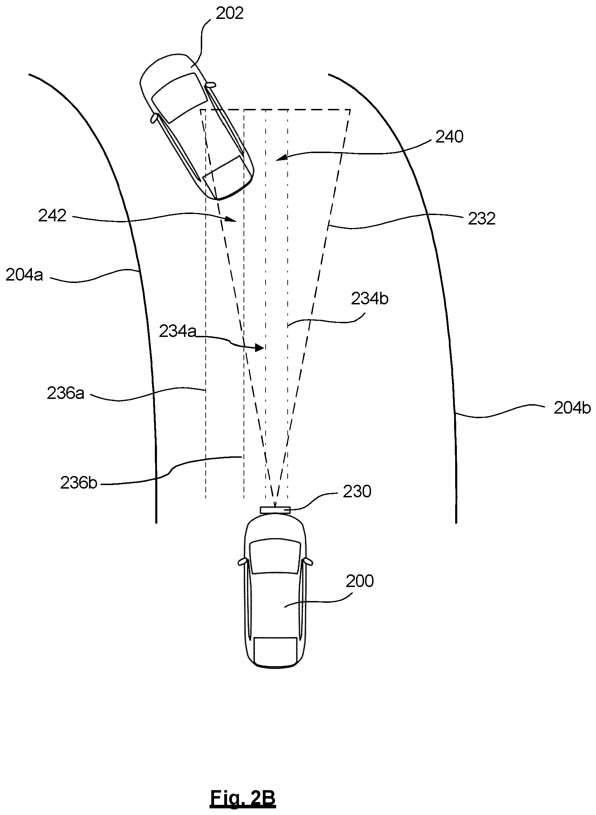

FIG. 2A is a schematic illustration of a car 200 and the view regions of its two sensors (a radar 210 and a camera 220). Specifically, the radar 210 has a view region 212 and the camera 220 has a view region 222, which partially overlaps with the view region 212 of the radar. A left boundary 234a and a right boundary 234b of the base filter region 240 are defined as lines that are parallel to a center line (not shown in FIG. 2B) that is defined by longitudinal middle of the car. In horizontal direction, these boundaries 234a, 234b have an equal distance to the center line.

The method's execution may depend on the a priori calibration minimally, provided one of the paired sensors greatly differs from the direction the vehicle travels, while the other's is well aligned with this traveling direction. The error of the a priori calibration is realized as an error in the projected filtered region. This dependency on the a priori calibration can be loosened by several methods:
∘ If the first result is not ideal, executing the method iteratively will lead to a better solution.
∘ Executing the filtering several times, with differently modified a priori calibrations can compensate for its error. (With increasing the number of said filtering executions, the execution time also increases, though since the filtering algorithm is lightweight (see before), the whole process will still remain lightweight.)

The selected filtering region is modified based on the steering wheel angle. This may further increase the success of pairing, since on a curved road, the other cars may not be in the filtered region if it is not modified when steering. The filtered region can be modified as:
∘ In case of 3D detections: Y_{new} = Y_{old} + sin(steering angle) * X * c (Here, c is a preset constant, modifying the sensitivity of the effect of steering.)
∘ In case of image-space detections: Y_{new} = Y_{old} + sin(steering angle) * X * c * fₓ / resₓ (Here, fₓ is the focal length of the camera, resₓ is the width of the camera in pixels.)

FIG. 2B is a schematic illustration of the car 200, the view region 234 of a sensor 230 of the car and a base filter area 240 as well as a shifted filter area 242 based on a steering angle of the car. Specifically, it can be seen that the base filter area 240, which corresponds to the filter area when the car is driving straight, has boundaries 234a, 234b.

When the car is steering to the left, the filter region is also shifted to the left, thus obtaining a new filter region 242, with boundaries 236a, 236b that are shifted to the left from the boundaries 234a, 234b of the base filter region.

In one embodiment, the shift of the boundaries is proportional to a steering angle or a sine of the steering angle or another function of the steering angle. The width of the shifted filter region may be the same as the width of the base filter region or in other embodiments it may also vary based on a function of the steering angle.

As can be seen in FIG. 2B the left-shifting of the filter region has the advantage that the filter region is shifted in the direction that the vehicle is steering to. Thus, it is more likely that a lead car 202 falls in the filter region. Even though the filtering significantly reduces the number of datapoints that fall in the overlap of the filter region and the view region, it is very likely that the lead car falls into this overlap.

In other words, in one embodiment, the car driving in front of the vehicle that carries the sensor is out of the center region as seen on the radar frames, if this region is not offset by the steering angle. Thus, using the steering angle for modifying the filtered area makes the data collection shorter, while not changing the results' quality.

As can be seen in FIG. 2B, the filter region typically only partially overlaps with the view region 232 of the sensor.

### COMPUTING THE RESULTS

For finding the extrinsic calibration of the sensors in question, we compute the transformation, for which the error between the paired points is minimal. A good choice for achieving this is using optimization - it can minimize the error between the paired points iteratively, arriving at a state of transformation that represent the real extrinsic calibration well enough.

The method of point pairing described before is fast and robust, plus it can be used in case of any of the mentioned sensor types. Furthermore, thanks to the method of point pairing, it is also possible to calibrate together more than two sensors at the same time, further increasing the stability of the method. This is also referred to as bundle adjustment. A possible formalization of it for our case is as follows. Let there be three sensors (A, B and C). Using regular optimization, only the error between the point pairs of e.g. the sensor pair A-B would be minimized. By using bundle adjustment, we can minimize the error between the point pairs of e.g. the sensor pairs A-B, A-C and B-C at the same time, which results in a better overall result.

Analogously for FIG. 1: On the figure, we can see the detected objects on the camera frame marked as small crosses, the detected objects on the radar frame marked as circles. Additionally, there can in practice be further points (not shown in FIG. 1), representing the detected objects on the lidar frame. The bundle adjustment minimizes the errors between the points pairs of all possible sensor combinations at the same time, thus decreasing the overall error efficiently.

During bundle adjustment, the error metrics between any two sensor pairing may differ. Such decisions are up to the user to decide.

Using bundle adjustment is not a must for implementing the method, regular optimization or any other method achieving the same goals could be proper for solving the problem. In a preferred embodiment bundle adjustment is used for its apparent advantages and its prevalence.

### VALIDATION

The base of the validation is the calibration process described above. If the calibration of the sensors gives the same (or nearly the same) extrinsic parameters as the a priori calibration, the a priori calibration is deemed still valid.

Although it may seem straightforward at this point, the trivial comparing of the a priori and resulting calibrations' extrinsic parameters is often not the best solution. Instead, the following may be preferred: For each sensor calibrated to another, we compute the center points of its detections as projected onto the other sensor's space - using both the a priori and the resulting extrinsic parameters just found. The error between these points and their pairs is then computed, for both the a priori and the resulting cases. This could already been found during the first and last steps of the optimization. The metric used for computing the error can be used freely and is up to the user to decide. These errors are compared e.g. by taking their ratio and setting it against some threshold.

Repeating this method in an ongoing manner, we can achieve a continuous validation process of the extrinsic parameters of said sensors.

Before validation is possible, the a priori calibration is obtained, using the above-described calibration.

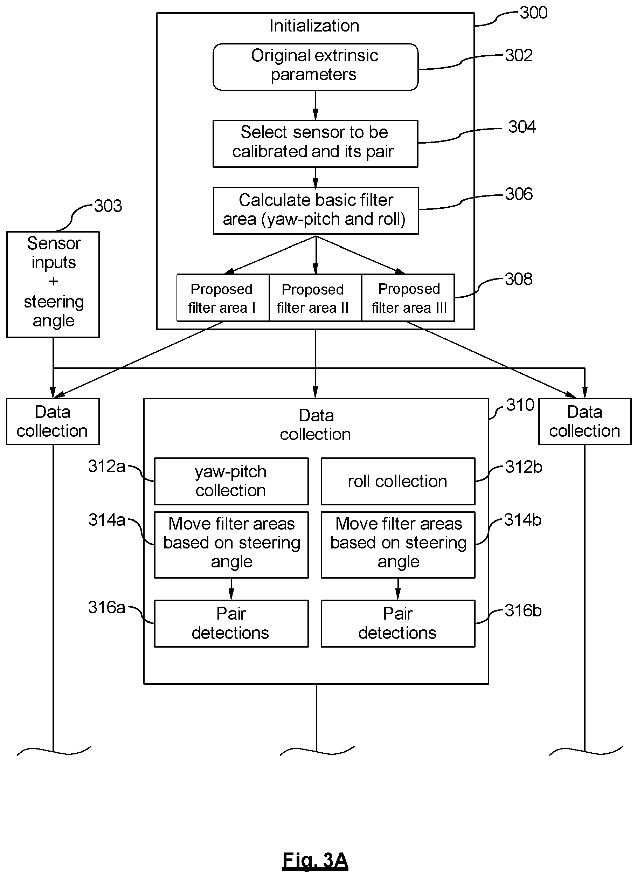

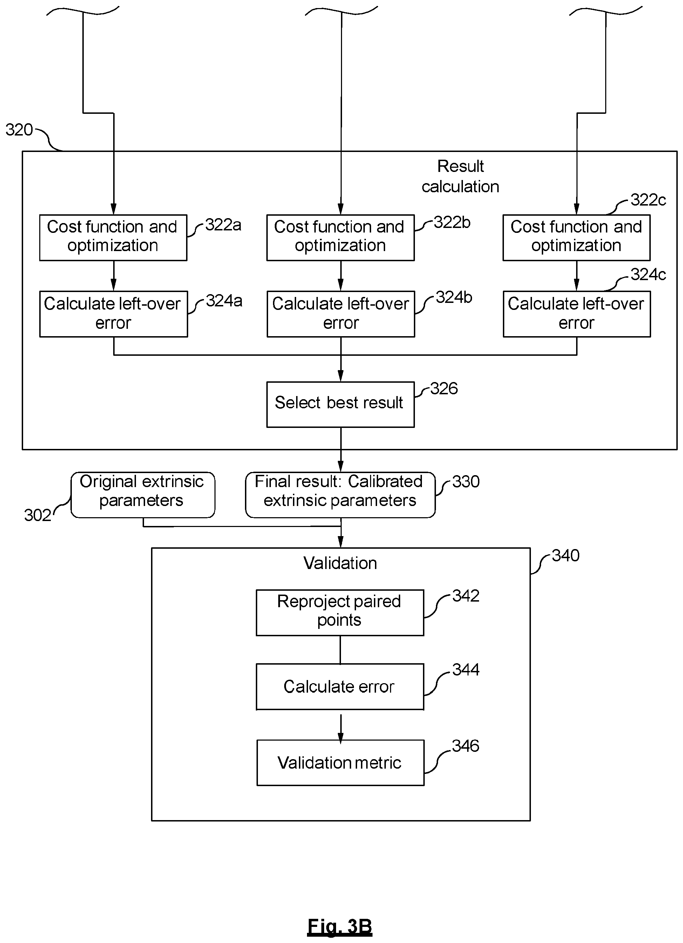

FIGs. 3A and 3B are a further detailed flow chart of a method for initializing 300, collecting data 310, calculating 320 results, and validating 340 the original parameters, also referred to as a priori parameters.

In detail, the initialisation 300 comprises the following steps:
In a first step 302 original extrinsic parameters are initialised. This may involve determining an a priori calibration based on other sources, e.g. information about the location of the sensors.

Then, in step 304 one or more sensors to be calibrated are selected and the sensor pairing is determined. In step 306, a basic filter area is calculated. This basic filter area may be based on yaw-pitch and roll. Subsequently, in the 308 three proposed filter areas are determined and the following steps of collecting data and calculating results are performed separately for these three proposed filter areas. Determining the proposed filter areas may comprise determining one or more parameters of the proposed filter areas, but it is understood that further parameters may be adjusted during data acquisition.

In an embodiment, the width and the center line of the filter area (which may be shifted later with a steering direction of the vehicle) are determined during these steps.

In a preferred embodiment, the center line is known on the sensor which should be calibrated, however, it is unknown on the reference sensor. Thus, the center line has to be transformed into the reference sensor's coordinate system. Since this step (possibly) introduces errors, as the exact extrinsic parameters are not known, the following optimization can be performed: Multiple transformations with slightly different parameters are applied, e.g. based on different approaches for determining the transformation parameters or based on introduced a (e.g. random) variation to the parameters. Based on the multiple different transformations, multiple filter areas may be determined and the one that yields best results may be used at the end of the optimization.

The data collection 310 may be performed when the vehicle (or preferably a fleet of vehicles) is travelling on roads for real-world data acquisition. It is, however, understood that the presented method may also be applied in a virtual scenario where a virtual vehicle is travelling through a virtual world (and acquiring virtual data from a simulated environment).

The data collection 310 furthermore comprises the following steps:
Firstly, in step 312a, data for yaw-pitch calibration are collected. In parallel, in step 312b, data for roll calibration are collected.

In steps 314a, 314b filter areas are moved based on a current steering angle of the vehicle, on which the one or more sensors are mounted. The filter areas of one or more or all sensors may be moved based on the steering angle. In addition to the steering angle, additional information such as a speed of the vehicle may be used to move or otherwise adjust the filter area(s).

In steps 316a, 316b corresponding pairs are identified in the filtered data.

The result calculation 320 comprises the following steps:
First, for all three collected sets of data a cost function is evaluated and optimized in steps 322a, 322b and 322c. even after extensive optimization small errors remain and these remaining leftover errors in steps 324a, 324b, 324c. Subsequently, in step 326, the errors can be compared and the best result selected.

The original extrinsic parameters 302 and the final result of calibrated extrinsic parameters 330 can then be provided to the validation 340.

The validation 340 comprises the following steps:
The paired points are reprojected in step 342, and an error is calculated in step 344. Finally, a validation metric is applied to evaluate whether the a priori parameters are correct. For example, the a priori parameters may be considered as correct if error calculated in step 344 is smaller than a predetermined threshold. Alternatively, the method may be performed for several a priori parameters and those that yield the smallest calculated error are determined as the correct parameters.

## Claims

1. A computer-implemented method for calibrating a first and a second sensor of a vehicle (122, 124, 126), the method comprising:
- obtaining first data from the first sensor and second data from the second sensor,
- filtering at least the second data based on positions of data points of the second data, wherein the filtering the second data comprises filtering based on a filtering region, wherein the filtering region is shifted based on an angle of a steering direction of the vehicle (122, 124, 126) to partially overlap with a view region of the second sensor, wherein the likelihood of an object moving on a curved path falling into the overlap is increased, and
- determining one or more parameters (302, 330) of a calibration between the first and the second sensor based on the first data and the filtered second data.

2. The method of claim 1, further comprising using an a priori calibration to convert the first data and/or the second data into a common domain.

3. The method of claims 1 or 2, further comprising a step of detecting first objects in the first data and/or detecting second objects in the filtered second data and performing the determining of the one or more parameters (302, 330) based on the first and/or second objects, preferably wherein the determining the one or more parameters (302, 330) is based on center points of the first and/or second objects.

4. The method of one of the previous claims, wherein the first sensor and/or the second sensor comprise one or more of a regular camera, a stereo camera, a radar (210), a lidar.

5. The method of one of the previous claims, wherein the one or more parameters (302, 330) of the calibration include yaw and pitch parameters (302, 330), and the method further comprises filtering the second data based on a filtering region that has a region width around a center line from the sensor (100, 230) towards a distant point, wherein the distant point has a lateral and/or vertical coordinate component that corresponds to the lateral and/or vertical coordinate component of a position of the sensor (100, 230).

6. The method of claim 5, wherein
- the region width is determined based on a predetermined table that assigns a predetermined width to a given pair of first and second sensor, and/or
- the region width is determined based on a position and/or an orientation of the sensor (100, 230).

7. The method of claim 5 or 6, wherein a position of the distant point in the coordinates of a reference sensor is determined as:
- ${p}_{ref_sensor} = T {p}_{cal_sensor} ,$
- ${p}_{ref_sensor} = {K}_{ref_sensor} T {p}_{cal_sensor} ,$
- ${p}_{ref_sensor} = T {K}_{cal_sensor}^{- 1} {p}_{cal_sensor} , and$
- ${p}_{ref_sensor} = {K}_{ref_sensor} T {K}_{cal_sensor}^{- 1} {p}_{cal_sensor} ,$
wherein **p**_{cal_sensor} is a position of the distant point in coordinates of a calibration sensor, **p**_{ref_sensor} is the position of the distant point in the reference sensor's coordinates, **T** is a matrix transforming between the coordinate systems of the calibration sensor and the reference sensor, and **K**_{cal_sensor} and **K**_{ref_sensor} are the respective camera matrix transformations.

8. The method of one of the previous claims, wherein the one or more parameters (302, 330) of the calibration include at least one roll parameter, and the method further comprises filtering the second data based on a filtering region that has a fixed width around a center line from the sensor (100, 230) towards a distant point that in coordinates of the sensor (100, 230) is laterally shifted from the sensor position by a lateral shift.

9. The method of one of the previous claims, preferably wherein the determining a lateral location of the filtering region comprises evaluating a sinus of an angle of the steering direction, wherein preferably the evaluating comprises multiplying the sinus of the angle of the steering direction with a sensitivity constant, preferably further multiplying with a constant proportional to a focal length of a camera sensor.

10. The method of one of the previous claims, wherein the method is carried out repeatedly, using a plurality of candidate a priori calibrations between the first and second sensor, and wherein preferably the method comprises an additional step of choosing a preferred a priori calibration from the plurality of candidate a priori calibrations.

11. The method of one of the previous claims, wherein the determining the one or more parameters (302, 330) of the calibration between the first sensor and the second sensor comprises:
- determining a pairing between points in the first data and points in the second data, and
- determining the one or more parameters (302, 330) such that an error between paired points is minimized,
preferably wherein the calibrating the first and the second sensor further comprises calibrating a third sensor with the first and the second sensor, and wherein the determining one or more parameter of the calibration comprises minimizing an error of point pairs between the first and second sensor, point pairs between the second and third sensor, and point pairs between the third and first sensor, wherein preferably the minimizing of the error of the point pairs comprises minimizing a weighted sum of the errors of the point pairs of the sensor pairs.

12. The method of one of the previous claims, further comprising validating (340) the determined calibration, wherein the validating (340) comprises comparing the one or more parameters (302, 330) of the determined calibration with one or more corresponding parameters (302, 330) of an a priori calibration and validating (340) the a priori calibration if a difference between the determined calibration and the a priori calibration is smaller than a predetermined threshold.

13. The method of claim 12, wherein the validating (340) comprises, for each of a plurality of sensors (100, 230), which comprise the first and the second sensor:
- determining first center points of detected objects as projected onto coordinates of another sensor of the plurality of sensors (100, 230) using the parameters (302, 330) of the determined calibration,
- determining second center points of detected objects as projected onto coordinates of the other sensor of the plurality of sensors using parameters of the a priori calibration, and
- determining a distance between the first and the second center points,
wherein preferably the calibration between the sensor (100, 230) and the other sensor of the plurality of sensors (100, 230) is validated if the distance is smaller than a predetermined threshold.

14. A calibration unit for calibrating a first and a second sensor of a vehicle (122, 124, 126), the calibration unit comprising:
- an obtaining unit for obtaining first data from a first sensor and second data from the second sensor,
- a filtering unit for filtering at least the second data based on positions of data points of the second data, wherein the filtering the second data comprises filtering based on a filtering region, wherein the filtering region is shifted based on an angle of a steering direction of the vehicle (122, 124, 126) to partially overlap with a view region of the second sensor, wherein the likelihood of an object moving on a curved path falling into the overlap is increased, and
- a determining unit for determining one or more parameters (302, 330) of a calibration between the first and the second sensor based on the first data and the filtered second data.

15. A computer-readable storage medium storing program code executed for calibrating a first and a second sensor of a vehicle (122, 124, 126), the program code comprising instructions that when executed by a processor carry out the method of one of claims 1 to 13.

## Patentansprüche

1. Computerimplementiertes Verfahren zum Kalibrieren eines ersten und eines zweiten Sensors eines Fahrzeugs (122, 124, 126), wobei das Verfahren Folgendes umfasst:
- Erhalten erster Daten von dem ersten Sensor und zweiter Daten von dem zweiten Sensor,
- Filtern mindestens der zweiten Daten basierend auf Positionen von Datenpunkten der zweiten Daten, wobei das Filtern der zweiten Daten Filtern basierend auf einem Filterbereich umfasst, wobei der Filterbereich basierend auf einem Winkel einer Lenkrichtung des Fahrzeugs (122, 124, 126) verschoben wird, um sich teilweise mit einem Sichtbereich des zweiten Sensors zu überlappen, wobei die Wahrscheinlichkeit, dass ein Objekt, das sich auf einem gekrümmten Pfad bewegt, in die Überlappung fällt, erhöht wird, und
- Bestimmen eines oder mehrerer Parameter (302, 330) einer Kalibrierung zwischen dem ersten und dem zweiten Sensor basierend auf den ersten Daten und den gefilterten zweiten Daten.

2. Verfahren nach Anspruch 1, ferner umfassend Verwenden einer A-priori-Kalibrierung, um die ersten Daten und/oder die zweiten Daten in einen gemeinsamen Bereich umzuwandeln.

3. Verfahren nach Anspruch 1 oder 2, ferner umfassend einen Schritt des Detektierens erster Objekte in den ersten Daten und/oder Detektierens zweiter Objekte in den gefilterten zweiten Daten und Durchführen des Bestimmens des einen oder der mehreren Parameter (302, 330) basierend auf den ersten und/oder zweiten Objekten, wobei das Bestimmen des einen oder der mehreren Parameter (302, 330) vorzugsweise auf Mittelpunkten der ersten und/oder zweiten Objekte basiert.

4. Verfahren nach einem der vorhergehenden Ansprüche, wobei der erste Sensor und/oder der zweite Sensor eines oder mehrere von einer regulären Kamera, einer Stereokamera, einem Radar (210), einem Lidar umfassen.

5. Verfahren nach einem der vorhergehenden Ansprüche, wobei der eine oder die mehreren Parameter (302, 330) der Kalibrierung Gier- und Nickparameter (302, 330) beinhalten und das Verfahren ferner Filtern der zweiten Daten basierend auf einem Filterbereich umfasst, der eine Bereichsbreite um eine Mittellinie von dem Sensor (100, 230) zu einem entfernten Punkt aufweist, wobei der entfernte Punkt eine laterale und/oder vertikale Koordinatenkomponente aufweist, die der lateralen und/oder vertikalen Koordinatenkomponente einer Position des Sensors (100, 230) entspricht.

6. Verfahren nach Anspruch 5, wobei
- die Bereichsbreite basierend auf einer vorbestimmten Tabelle bestimmt wird, die einem gegebenen Paar aus erstem und zweitem Sensor eine vorbestimmte Breite zuweist, und/oder
- die Bereichsbreite basierend auf einer Position und/oder einer Ausrichtung des Sensors (100, 230) bestimmt wird.

7. Verfahren nach Anspruch 5 oder 6, wobei eine Position des entfernten Punkts in den Koordinaten eines Referenzsensors bestimmt wird als:
- ${p}_{ref_sensor} = T {p}_{cal_sensor} ,$
- ${p}_{ref_sensor} = {K}_{ref_sensor} T {p}_{cal_sensor} ,$
- ${p}_{ref_sensor} = T {K}_{cal_sensor}^{- 1} {p}_{cal_sensor} und$
- ${p}_{ref_sensor} = {K}_{ref_sensor} T {K}_{cal_sensor}^{- 1} {p}_{cal_sensor} ,$
wobei **p**_{cal_sensor} eine Position des entfernten Punkts in Koordinaten eines Kalibrierungssensors ist, **p**_{ref_sensor} die Position des entfernten Punkts in den Koordinaten des Referenzsensors ist, **T** eine Matrixtransformation zwischen den Koordinatensystemen des Kalibrierungssensors und des Referenzsensors ist und **K**_{cal_sensor} und **K**_{ref_sensor} die jeweiligen Kameramatrixtransformationen sind.

8. Verfahren nach einem der vorhergehenden Ansprüche, wobei der eine oder die mehreren Parameter (302, 330) der Kalibrierung mindestens einen Rollparameter beinhalten und das Verfahren ferner Filtern der zweiten Daten basierend auf einem Filterbereich umfasst, der eine feste Breite um eine Mittellinie von dem Sensor (100, 230) zu einem entfernten Punkt aufweist, der in Koordinaten des Sensors (100, 230) um eine laterale Verschiebung lateral von der Sensorposition verschoben ist.

9. Verfahren nach einem der vorhergehenden Ansprüche, wobei das Bestimmen einer lateralen Position des Filterbereichs vorzugsweise Auswerten eines Sinus eines Winkels der Lenkrichtung umfasst, wobei das Auswerten vorzugsweise Multiplizieren des Sinus des Winkels der Lenkrichtung mit einer Empfindlichkeitskonstante, vorzugsweise ferner Multiplizieren mit einer Konstante proportional zu einer Brennweite eines Kamerasensors umfasst.

10. Verfahren nach einem der vorhergehenden Ansprüche, wobei das Verfahren unter Verwendung einer Mehrzahl von A-priori-Kandidatenkalibrierungen zwischen dem ersten und zweiten Sensor wiederholt durchgeführt wird und wobei das Verfahren vorzugsweise einen zusätzlichen Schritt des Auswählens einer bevorzugten A-priori-Kalibrierung aus der Mehrzahl von A-priori-Kandidatenkalibrierungen umfasst.

11. Verfahren nach einem der vorhergehenden Ansprüche, wobei das Bestimmen des einen oder der mehreren Parameter (302, 330) der Kalibrierung zwischen dem ersten Sensor und dem zweiten Sensor umfasst:
- Bestimmen einer Paarung zwischen Punkten in den ersten Daten und Punkten in den zweiten Daten, und
- Bestimmen des einen oder der mehreren Parameter (302, 330) derart, dass ein Fehler zwischen gepaarten Punkten minimiert wird,
wobei vorzugsweise das Kalibrieren des ersten und des zweiten Sensors ferner das Kalibrieren eines dritten Sensors mit dem ersten und dem zweiten Sensor umfasst, und wobei das Bestimmen des einen oder der mehreren Parameter der Kalibrierung das Minimieren eines Fehlers von Punktpaaren zwischen dem ersten und dem zweiten Sensor, von Punktpaaren zwischen dem zweiten und dem dritten Sensor und von Punktpaaren zwischen dem dritten und dem ersten Sensor umfasst, wobei vorzugsweise das Minimieren des Fehlers der Punktpaare das Minimieren einer gewichteten Summe der Fehler der Punktpaare der Sensorpaare umfasst.

12. Verfahren nach einem der vorhergehenden Ansprüche, ferner umfassend Validieren (340) der bestimmten Kalibrierung, wobei das Validieren (340) das Vergleichen des einen oder der mehreren Parameter (302, 330) der bestimmten Kalibrierung mit einem oder mehreren entsprechenden Parametern (302, 330) einer A-priori-Kalibrierung und Validieren (340) der A-priori-Kalibrierung, wenn eine Differenz zwischen der bestimmten Kalibrierung und der A-priori-Kalibrierung kleiner als ein vorbestimmter Schwellenwert ist, umfasst.

13. Verfahren nach Anspruch 12, wobei das Validieren (340) für jeden einer Mehrzahl von Sensoren (100, 230), die den ersten und den zweiten Sensor umfassen, Folgendes umfasst:
- Bestimmen erster Mittelpunkte detektierter Objekte, die auf Koordinaten eines anderen Sensors der Mehrzahl von Sensoren (100, 230) projiziert sind, unter Verwendung der Parameter (302, 330) der bestimmten Kalibrierung,
- Bestimmen zweiter Mittelpunkte detektierter Objekte, die auf Koordinaten des anderen Sensors der Mehrzahl von Sensoren projiziert sind, unter Verwendung von Parametern der A-priori-Kalibrierung, und
- Bestimmen eines Abstands zwischen dem ersten und dem zweiten Mittelpunkt,
wobei vorzugsweise die Kalibrierung zwischen dem Sensor (100, 230) und dem anderen Sensor der Mehrzahl von Sensoren (100, 230) validiert wird, wenn der Abstand kleiner als ein vorbestimmter Schwellenwert ist.

14. Kalibrierungseinheit zum Kalibrieren eines ersten und eines zweiten Sensors eines Fahrzeugs (122, 124, 126), wobei die Kalibrierungseinheit Folgendes umfasst:
- eine Erhalteeinheit zum Erhalten erster Daten von einem ersten Sensor und zweiter Daten von dem zweiten Sensor,
- eine Filtereinheit zum Filtern mindestens der zweiten Daten basierend auf Positionen von Datenpunkten der zweiten Daten, wobei das Filtern der zweiten Daten Filtern basierend auf einem Filterbereich umfasst, wobei der Filterbereich basierend auf einem Winkel einer Lenkrichtung des Fahrzeugs (122, 124, 126) verschoben wird, um sich teilweise mit einem Sichtbereich des zweiten Sensors zu überlappen, wobei die Wahrscheinlichkeit, dass ein Objekt, das sich auf einem gekrümmten Pfad bewegt, in die Überlappung fällt, erhöht wird, und
- eine Bestimmungseinheit zum Bestimmen eines oder mehrerer Parameter (302, 330) einer Kalibrierung zwischen dem ersten und dem zweiten Sensor basierend auf den ersten Daten und den gefilterten zweiten Daten.

15. Computerlesbares Speichermedium, das Programmcode speichert, der zum Kalibrieren eines ersten und eines zweiten Sensors eines Fahrzeugs (122, 124, 126) ausgeführt wird, wobei der Programmcode Anweisungen umfasst, die, wenn sie von einem Prozessor ausgeführt werden, das Verfahren nach einem der Ansprüche 1 bis 13 durchführen.

## Revendications

1. Procédé mis en œuvre par ordinateur pour étalonner un premier et un second capteur d'un véhicule (122, 124, 126), le procédé comprenant :
- l'obtention de premières données à partir du premier capteur et de secondes données à partir du second capteur,
- le filtrage d'au moins les secondes données sur la base de positions de points de données des secondes données, dans lequel le filtrage des secondes données comprend le filtrage sur la base d'une région de filtrage, dans lequel la région de filtrage est décalée sur la base d'un angle d'une direction de braquage du véhicule (122, 124, 126) pour chevaucher partiellement une région de champ de vision du second capteur, dans lequel la probabilité qu'un objet se déplaçant sur une trajectoire incurvée tombe dans le chevauchement est augmentée, et
- la détermination d'un ou plusieurs paramètres (302, 330) d'un étalonnage entre le premier et le second capteur sur la base des premières données et des secondes données filtrées.

2. Procédé selon la revendication 1, comprenant en outre l'utilisation d'un étalonnage a priori pour convertir les premières données et/ou les secondes données dans un référentiel commun.

3. Procédé selon les revendications 1 ou 2, comprenant en outre une étape de détection de premiers objets dans les premières données et/ou de détection de seconds objets dans les secondes données filtrées et d'exécution de la détermination des un ou plusieurs paramètres (302, 330) sur la base des premiers et/ou seconds objets, de préférence dans lequel la détermination des un ou plusieurs paramètres (302, 330) est basée sur des points centraux des premiers et/ou seconds objets.

4. Procédé selon l'une des revendications précédentes, dans lequel le premier capteur et/ou le second capteur comprennent un ou plusieurs d'une caméra standard, d'une caméra stéréo, d'un radar (210), d'un lidar.

5. Procédé selon l'une des revendications précédentes, dans lequel les un ou plusieurs paramètres (302, 330) de l'étalonnage comprennent des paramètres de lacet et de tangage (302, 330), et le procédé comprend en outre le filtrage des secondes données sur la base d'une région de filtrage qui a une largeur de région autour d'un axe central du capteur (100, 230) vers un point distant, dans lequel le point distant a une composante de coordonnées latérale et/ou verticale qui correspond à la composante de coordonnées latérale et/ou verticale d'une position du capteur (100, 230).

6. Procédé selon la revendication 5, dans lequel
- la largeur de région est déterminée sur la base d'une table prédéterminée qui attribue une largeur prédéterminée à une paire donnée de premier et second capteurs, et/ou
- la largeur de région est déterminée sur la base d'une position et/ou d'une orientation du capteur (100, 230).

7. Procédé selon la revendication 5 ou 6, dans lequel une position du point distant dans les coordonnées d'un capteur de référence est déterminée comme :
- ${p}_{ref_capteur} = T {p}_{cal_capteur} ,$
- ${p}_{ref_capteur} = {K}_{ref_capteur} T {p}_{cal_capteur} ,$
- ${p}_{ref_capteur} = T {K}_{cal_capteur}^{- 1} {p}_{cal_capteur} , et$
- ${p}_{ref_capteur} = {K}_{ref_capteur} T {K}_{cal_capteur}^{- 1} {p}_{cal_capteur} ,$
dans lequel **p**_{cal_capteur} est une position du point distant dans des coordonnées d'un capteur d'étalonnage, **p**_{ref_capteur} est la position du point distant dans les coordonnées du capteur de référence, **T** est une matrice de transformation entre les systèmes de coordonnées du capteur d'étalonnage et du capteur de référence, et **K**_{cal_capteur} et **K**_{ref_capteur} sont les transformations matricielles de caméra respectives.

8. Procédé selon l'une des revendications précédentes, dans lequel les un ou plusieurs paramètres (302, 330) de l'étalonnage comprennent au moins un paramètre de roulis, et le procédé comprend en outre le filtrage des secondes données sur la base d'une région de filtrage qui a une largeur fixe autour d'un axe central du capteur (100, 230) vers un point distant qui dans des coordonnées du capteur (100, 230) est décalé latéralement de la position de capteur par un décalage latéral.

9. Procédé selon l'une des revendications précédentes, de préférence dans lequel la détermination d'un emplacement latéral de la région de filtrage comprend l'évaluation du sinus d'un angle de la direction de braquage, dans lequel de préférence l'évaluation comprend la multiplication du sinus de l'angle de la direction de braquage par une constante de sensibilité, de préférence en outre la multiplication par une constante proportionnelle à une longueur focale d'un capteur de caméra.

10. Procédé selon l'une des revendications précédentes, dans lequel le procédé est mis en œuvre de manière répétée, en utilisant une pluralité d'étalonnages a priori candidats entre les premier et second capteurs, et dans lequel de préférence le procédé comprend une étape supplémentaire de choix d'un étalonnage a priori préféré parmi la pluralité d'étalonnages a priori candidats.

11. Procédé selon l'une des revendications précédentes, dans lequel la détermination des un ou plusieurs paramètres (302, 330) de l'étalonnage entre le premier capteur et le second capteur comprend :
- la détermination d'un appariement entre des points dans les premières données et des points dans les secondes données, et
- la détermination des un ou plusieurs paramètres (302, 330) de sorte qu'une erreur entre des points appariés soit minimisée,
de préférence dans lequel l'étalonnage du premier et du second capteur comprend en outre l'étalonnage d'un troisième capteur avec le premier et le second capteur, et dans lequel la détermination des un ou plusieurs paramètres de l'étalonnage comprend la minimisation d'une erreur de paires de points entre le premier et le second capteur, de paires de points entre le second et le troisième capteur, et de paires de points entre le troisième et le premier capteur, dans lequel de préférence la minimisation de l'erreur des paires de points comprend la minimisation d'une somme pondérée des erreurs des paires de points des paires de capteurs.

12. Procédé selon l'une des revendications précédentes, comprenant en outre la validation (340) de l'étalonnage déterminé, dans lequel la validation (340) comprend la comparaison des un ou plusieurs paramètres (302, 330) de l'étalonnage déterminé avec un ou plusieurs paramètres correspondants (302, 330) d'un étalonnage a priori et la validation (340) de l'étalonnage a priori si une différence entre l'étalonnage déterminé et l'étalonnage a priori est inférieure à un seuil prédéterminé.

13. Procédé selon la revendication 12, dans lequel la validation (340) comprend, pour chacun d'une pluralité de capteurs (100, 230), qui comprennent le premier et le second capteur :
- la détermination de premiers points centraux d'objets détectés tels que projetés sur des coordonnées d'un autre capteur de la pluralité de capteurs (100, 230) en utilisant les paramètres (302, 330) de l'étalonnage déterminé,
- la détermination de seconds points centraux d'objets détectés tels que projetés sur des coordonnées de l'autre capteur de la pluralité de capteurs en utilisant des paramètres de l'étalonnage a priori, et
- la détermination d'une distance entre les premiers et seconds points centraux, dans lequel de préférence l'étalonnage entre le capteur (100, 230) et l'autre capteur de la pluralité de capteurs (100, 230) est validé si la distance est inférieure à un seuil prédéterminé.

14. Unité d'étalonnage pour étalonner un premier et un second capteur d'un véhicule (122, 124, 126), l'unité d'étalonnage comprenant :
- une unité d'obtention pour obtenir des premières données à partir d'un premier capteur et des secondes données à partir du second capteur,
- une unité de filtrage pour filtrer au moins les secondes données sur la base de positions de points de données des secondes données, dans lequel le filtrage des secondes données comprend le filtrage sur la base d'une région de filtrage, dans lequel la région de filtrage est décalée sur la base d'un angle d'une direction de braquage du véhicule (122, 124, 126) pour chevaucher partiellement une région de champ de vision du second capteur, dans lequel la probabilité qu'un objet se déplaçant sur une trajectoire incurvée tombe dans le chevauchement est augmentée, et
- une unité de détermination pour déterminer un ou plusieurs paramètres (302, 330) d'un étalonnage entre le premier et le second capteur sur la base des premières données et des secondes données filtrées.

15. Support de stockage lisible par ordinateur stockant un code de programme exécuté pour étalonner un premier et un second capteur d'un véhicule (122, 124, 126), le code de programme comprenant des instructions qui, lorsqu'elles sont exécutées par un processeur, mettent en œuvre le procédé selon l'une des revendications 1 à 13.
